# EUROPEAN PATENT SPECIFICATION

(11) **EP 3 667 054 B1**
(45) Date of publication and mention of the grant of the patent: **04.09.2024**
(21) Application number: 19213565.5
(22) Date of filing: 04.12.2019
(51) Int. Cl.: F02M 21/02, F02M 21/06, F02D 19/02, F02M 26/30, F02M 26/73, F02M 25/022, F02B 29/04

(54) **FUEL SUPPLY SYSTEM FOR VEHICLES PROVIDED WITH PRESSURE REDUCER WITH RECOVERY OF THERMAL ENERGY, AND METHOD OF ADJUSTMENT OF A FUEL SUPPLY SYSTEM FOR VEHICLES WITH THERMAL ENERGY RECOVERY**
KRAFTSTOFFVERSORGUNGSSYSTEM FÜR FAHRZEUGE MIT DRUCKMINDERER MIT RÜCKGEWINNUNG VON THERMISCHER ENERGIE, UND VERFAHREN ZUR EINSTELLUNG EINES KRAFTSTOFFVERSORGUNGSSYSTEMS FÜR FAHRZEUGE MIT RÜCKGEWINNUNG VON THERMISCHER ENERGIE
SYSTÈME D'ALIMENTATION EN CARBURANT POUR VÉHICULES MUNIS D'UN RÉDUCTEUR DE PRESSION AVEC RÉCUPERATION D'ÉNERGIE THERMIQUE, ET PROCÉDÉ DE RÉGULATION D'UN SYSTÈME D'ALIMENTATION EN CARBURANT POUR VÉHICULES AVEC RÉCUPERATION D'ÉNERGIE THERMIQUE

(30) Priority: 11.12.2018 IT 201800010979
(43) Date of publication of application: 17.06.2020
(73) Proprietor: Marelli Europe S.p.A., 20011 Corbetta (MI) (IT)
(72) Inventor: POGGI, Pierluigi, 20011 Corbetta, Milano (IT)
(74) Representative: Mitola, Marco

(56) References cited:
- EP-A1- 1 795 729
- EP-A2- 1 213 464
- WO-A1-2012/085949
- WO-A1-2017/150978
- DE-A1- 102004 057 466
- DE-U1- 202018 105 212
- DE-U1- 202018 105 212
- JP-A- 2007 332 799
- US-A- 3 565 201
- US-A- 5 483 943
- US-A- 6 044 825
- US-A1- 2013 019 848
- US-A1- 2018 079 281

## Description

### FIELD OF APPLICATION

The present invention relates to a fuel supply system for vehicles provided with pressure reducer with recovery of thermal energy, relative vehicle and method of adjustment of a fuel supply system for vehicles with thermal energy recovery.

### PRIOR ART

As is known, every vehicle with an internal combustion engine, powered completely or partly by gas (such as for example LPG, methane CH4, hydrogen H2, etc.) has a tank/cylinder for storing the same fuel at high pressure (1.6MPa for LPG, 20MPA for methane CH4, 70MPa for hydrogen H2, etc.) to increase the mass capacity thereof.

Instead, the use of gas in the internal combustion engine always takes place at a pressure reduced to a few tenths of MPa above the intake pressure. This pressure reduction, which in the case of LPG is also associated with a phase change (from liquid to gas), is always associated with a removal of heat from the device (known as "lung", pressure reducer, evaporator) which therefore in turn absorbs heat from the outside, lowering its temperature.

For an average LPG-powered 61kW combustion engine vehicle, the thermal power absorbed is estimated to range from 150W to over 3kW.

This absorption of heat inevitably leads the pressure reduction device to lose temperature, until it reaches levels that prevent it from functioning properly due to two phenomena.

The first phenomenon consists in reaching temperatures at which the movable elements (such as springs, membranes, etc.) of the pressure reducer lose their pressure regulation properties (for methane, hydrogen).

The second phenomenon consists in the fact that the temperature of the body/gas outlet is lower than the dew point of the gas itself which therefore would not be able to remain in the gaseous phase (in the case of LPG) .

To overcome these problems, it is usual to keep the pressure reducer heated by the cooling liquid coming from the engine cooling system.

This method, simple and archaic, satisfies the primary need to guarantee the correct operation of the pressure reducer (and therefore of the engine) but is nowadays not very efficient from an energy point of view.

In fact, the known solutions simply provide for a thermal exchange between the engine coolant fluid, appropriately withdrawn by a branch of the system, and the pressure reducer which is therefore thermostatted substantially at the same temperature of the engine.

In this way, however, a non-negligible amount of cooling power of the pressure reducer and, above all, already available since it is freed automatically by the expansion of the fuel gas, is dissipated.

It is therefore clear that the known solutions are not able to guarantee the aforementioned energy efficiency specifications/requirements. Solutions according to the preamble of claim 1 are disclosed by DE 202018105212 U1 and US 5483943 A.

### DISCLOSURE OF THE INVENTION

The need of solving the drawbacks and limitations mentioned with reference to the prior art is therefore felt.

Therefore, the need is felt to provide a fuel supply system for vehicles with a pressure reducer that is energy efficient.

This requirement is met by a fuel supply system for vehicles with pressure reducer according to claim 1.

### DESCRIPTION OF THE DRAWINGS

Further features and advantages of the present invention will appear more clearly from the following description of preferred non-limiting embodiments thereof, in which:

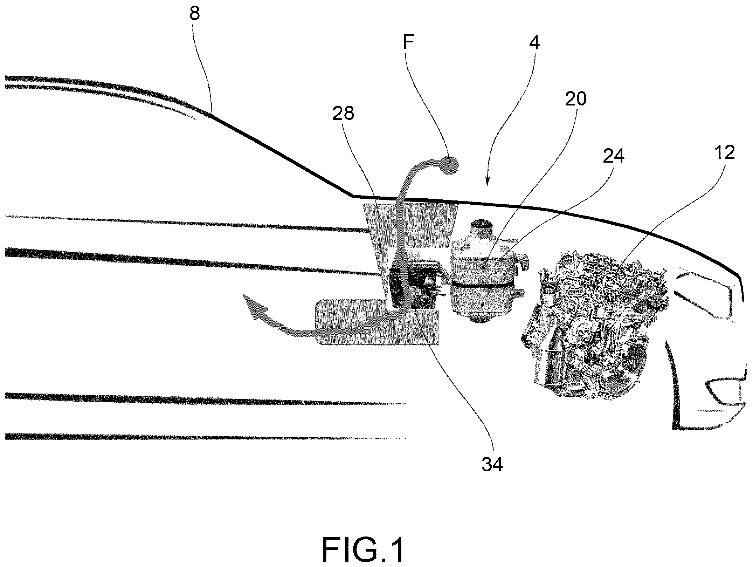

- figure 1 shows a schematic view of a vehicle comprising a fuel supply system provided with a pressure reducer with thermal energy recovery, according to an embodiment of the present invention;

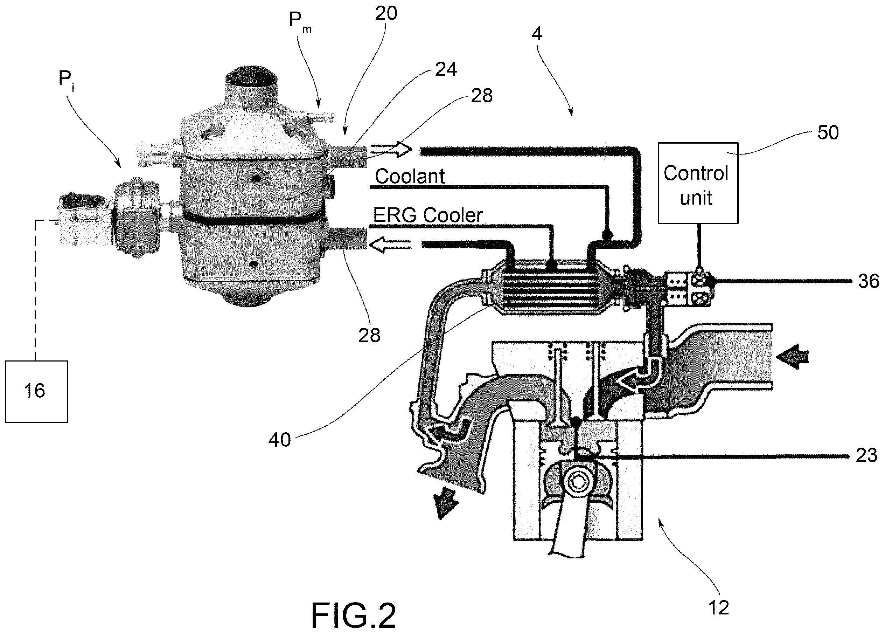

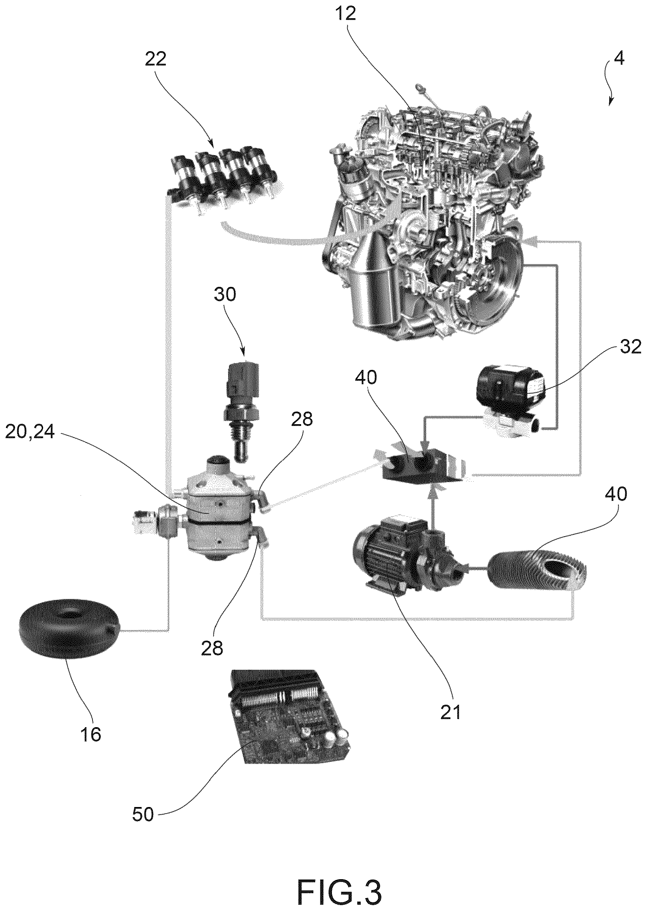

- figures 2-3 show schematic views of fuel supply systems for vehicles provided with a pressure reducer with thermal energy recovery, according to possible embodiments of the present invention.

Elements or parts of elements in common to the embodiments described below are referred to with the same reference numerals.

### DETAILED DESCRIPTION

With reference to the above figures, reference numeral 4 globally indicates an overall schematic view of a fuel supply system for motor applications, such as for example vehicles 8 according to the present invention.

It should be noted that the present invention may be applied to any type of vehicle 8, such as a motor vehicle, a bus, a truck and the like.

The concept of engine application must be understood in a broad sense, including for example generating sets, a cogeneration plant, etc.

For the purposes of the present invention, the aforementioned applications must be considered in an explanatory and non-exhaustive manner.

In particular, the present invention applies to supply systems for internal combustion engines or endothermic engines, preferably fed, at least partially, with so-called alternative fuels such as LPG, methane, hydrogen.

Said fuels, which are in the gaseous state in ambient conditions, are normally stored at high pressure inside a tank 16, which is part of the supply system 4.

For example, as seen, storage pressures of 1.6MPa are reached for LPG, 20MPA for methane CH4, 70MPa for hydrogen H2, etc.

The supply system 4 therefore comprises a pressure reducer, fluidly connected in input to said fuel tank 16 containing fuel compressed to an input pressure Pi, and adapted to feed the fuel to the internal combustion engine 12. In particular, the fuel is fed in the gaseous phase, at a delivery pressure Pm lower than the inlet pressure Pi.

The fluid at the delivery pressure Pm is then sent to special injectors 22 which inject it directly or indirectly into the combustion chamber 23 of the internal combustion engine 12.

Therefore, in a known manner, the pressure reducer 20 reduces the fuel pressure from the input value Pi to a delivery value Pm, so as to correctly supply the internal combustion engine 12.

In this significant pressure reduction, there is a considerable lowering of the temperature of a body 24 of the pressure reducer, due to the absorption of heat by the expanding gas. In order to prevent the body 24 of the pressure reducer 20 from reaching too low temperatures, the heat exchange between the pressure reducer and at least one exchanger fluid is provided.

The fuel supply system 4 comprises at least one exchanger fluid passing through at least one conveying duct 28 so as to at least partially lap a portion of the body 24 of the pressure reducer 20 to increase the temperature of said body 24 and simultaneously reduce the temperature of said exchanger fluid.

According to the invention, said conveying duct 28 is provided with at least an adjustment mean 32 suitable to regulate the flow rate of the exchanger fluid that laps the body 24 of the pressure reducer 20, so as to bring the body 24 of the pressure reducer 20 to a temperature higher than a predetermined minimum value.

In particular, said minimum temperature value is equal to the freezing temperature of atmospheric humidity or of that possibly contained in the supply gas under the conditions of use (in the case of use of methane/hydrogen as fuel); the minimum temperature value is above the boiling temperature of the fuel in the gaseous phase at the delivery pressure Pm, in the case of use of LPG as fuel.

In other words, the adjustment mean 32 is operated so as to regulate the flow of exchanging fluid to regulate the temperature of the body 24 of the pressure reducer 20.

There are various possible embodiments of said adjustment mean 32.

For example, the adjustment mean 32 may comprise a throttle valve.

It is also possible to use, as an adjustment mean 32, a thermostatic valve or a proportional valve, both suitable for regulating said flow of exchanger fluid.

It is also possible to use, as an adjustment mean 32, a variable displacement pump.

In particular, in order to carry out the heat exchange necessary to thermostat/heat the body 24 of the pressure reducer 20, it is possible to use different types of exchanger flows.

It should be noted that the temperature control of the pressure reducer body 24 preferably takes place by means of a temperature sensor 30, preferably arranged in contact with said body 24.

The temperature sensor 30 is able to generate a signal which is sent to a control unit 50 of the power supply system 4.

Said control unit 50 can be specific to the fuel supply system and therefore adapted to interface with a control unit of the internal combustion engine 12, or it can be integrated in the control unit of the internal combustion engine 12.

According to the invention, said at least one conveying duct 28 comprises a ventilation duct of a vehicle air conditioning system: therefore in this solution the exchanger fluid is the flow of air F destined to be introduced into the passenger compartment of the vehicle 8.

Preferably, an air/air exchanger 34 is provided in this solution which facilitates the heat exchange between the air of the air conditioning system and the body 24 of the pressure reducer 20.

According to a further possible embodiment, said at least one conveying duct 28 further comprises a branch duct of a cooling liquid of the internal combustion engine 12, so as to convey the cooling liquid towards the pressure reducer 20. This cooling system will in turn be at least a recirculation pump 21, suitable for moving or recirculating the liquid inside said system in a known manner.

According to a further possible embodiment, said at least one conveying duct 28 extends to at least partially lap an exhaust gas recirculation valve 36 (EGR) of the internal combustion engine 12.

Preferably, in such embodiment, the at least one conveying duct 28 extends to at least partially lap a heat exchanger 40 fluidly connected with said exhaust gas recirculation valve 36 (EGR).

It is also possible to make an exhaust gas recirculation valve 36 at least partially integrated into the body 24 of said pressure reducer 20, so as to directly yield heat from the exhaust gas recirculation valve 36 to the pressure reducer 20 itself.

The possible condensate liquid, i.e. water, generated by the heat exchange between the exchanger fluid and the body 24 of the pressure reducer can be collected and conveyed in a water tank (not shown) to be used for water injection phases in the internal combustion engine. Other uses are also possible, such as for example the use of water produced in headlamp cleaning systems or also for cleaning the windscreen or rear window.

The operation of a fuel supply system for vehicles with pressure reducer according to the present invention will now be described.

According to the invention, the method of adjusting a fuel supply system for vehicles supplied with alternative fuels with a pressure reducer comprises the steps of:
- providing a pressure reducer 20, fluidly connected in input to a fuel tank 16 containing compressed fuel at an input pressure Pi, and configured to supply in output, to an internal combustion engine 12 said fuel in gaseous phase, at a delivery pressure Pm lower than the inlet pressure Pi,
- providing at least one exchanger fluid passing through at least one conveying duct 28 so as to at least partially lap a portion of a body 24 of the pressure reducer 20 to increase the temperature of said body 24 and simultaneously reduce the temperature of said exchanger fluid,
- providing, at said conveying duct 28 at least one adjustment mean 32,
- adjusting said adjustment mean 32 to change the flow rate of exchanger fluid that laps the body 24 of the pressure reducer 20, so as to bring the body 24 of the pressure reducer 20 to a temperature higher than the freezing temperature of the atmospheric humidity or that possibly contained in the supply gas in the conditions of use (methane/hydrogen) and/or above the boiling temperature of the fuel in the gaseous phase at the delivery pressure (for LPG).

The adjustment method according to the invention further comprises the steps of connecting the at least one conveying duct 28 to a ventilation duct of an air conditioning system of the vehicle, so as to perform a thermal exchange between the pressure reducer 24 and a fluid of said air conditioning system.

The adjustment method may comprise the steps of connecting said at least one conveying duct 28 to an exhaust gas recirculation valve 36 so as to perform a thermal exchange between the pressure reducer 24 and the exhaust gas recirculation valve.

The method may comprise the step of adjusting the temperature of the internal combustion engine 12 by varying the heat exchange between the engine coolant liquid 12 and the pressure reducer 24 and/or the heat exchange between the exhaust gas recirculation valve 36 and the pressure reducer 24.

In other words, it is possible to simultaneously carry out thermal exchanges between different exchanger flows, each passing through a specific conveying duct.

The method may also comprise the step of assisting and/or replacing the conditioning system of the passenger compartment by regulating the heat exchange between the pressure regulator 24 and an air flow of the conditioning system.

The method may also comprise the step of condensing the ambient humidity and producing water in the liquid phase, to be used for water injection techniques in said internal combustion engine.

In essence, the pressure reducer is no longer heated to the temperature of the engine coolant (about 70-90 °C), as in the prior art solutions, but to a lower one, controlled and just enough to guarantee its functionality, generally but not necessarily, a few degrees above zero °C (in the case of methane and hydrogen supply) or above the boiling temperature of the outgoing gas in the case of LPG supply.

This 'reduced' heating, compared to known solutions, provides low temperature surfaces or a fluid that can be used for:
- assisting the vehicle's air conditioning system,
- replacing the air conditioning system in the passenger compartment,
- cooling the flue gas recirculation valve (EGR), as well as the EGR fluid,
- condensing the ambient humidity and producing water in the liquid phase, to be used for water injection techniques.

As can be appreciated from the description, the present invention allows overcoming the drawbacks of the prior art.

In fact, the present invention allows avoiding dispersing the heat (absorption of heat, cooling) which is generated in the pressure reducer of gas-powered vehicles (LPG, CH4, H2, etc.), and use it instead as a free source of "waste" energy for other purposes which today, in the prior art, instead require the use of primary energy.

The advantages that can be obtained are several, such as:
- reduction of overall consumption thanks to an improvement in the thermal efficiency of the engine;
- reduction of real consumption by acting on the reduction of the cooling capacity necessary for the air conditioning of the passenger compartment of the vehicle;
- availability at zero energy cost of a cold source, by condensation of steam, suitable for creating water reserves to be used for example in water injection of internal combustion engines, in order to lower the temperatures in the combustion chamber, to prevent the risk of detonation, increase the overall performance of the engine.

A further advantage is given by the fact that, in the case of a fluid connection (i.e. heat exchange) between the pressure reducer and the exhaust gas recirculation valve (EGR), the passage time of the engine from the supply with liquid fuel (typically petrol) to gaseous fuel supply (alternative, such as the LPG), is significantly reduced.

In fact, EGR is able to heat up significantly before the engine coolant and therefore is able to heat the pressure reducer in much shorter times than conventional solutions (which use the coolant as a heat source).

This means that the pressure reducer will go to temperature very quickly and therefore it will be possible to switch first from the conventional supply (petrol or diesel) to the alternative fuel supply (methane, LPG, hydrogen): this implies a reduction in consumption and polluting emissions.

Moreover, the present invention allows optimizing, or reducing, the thermostatting of the internal combustion engine. In fact, in the known solutions, the heating of the pressure reducer device is delegated, as seen, to a branching of the coolant in a passive manner. In this a relatively high amount of heat is dissipated to heat the reducer device, moreover, at a temperature well above that required for the correct operation of the reducer device itself. Therefore, in the known solutions, the heating of the engine is delayed, since a non-negligible quantity of heat is dissipated through the coolant unnecessarily: this results in less than optimal management of the engine temperature.

Moreover, the increase in cost of the present invention, compared with the solutions of the prior art, although variable depending on the complexity of implementation, is potentially zero if this type of system is introduced in a vehicle already designed for supply with gaseous fuels.

Therefore, the present invention can be easily applied as retrofitting to a pre-existing supply system, without requiring particular distortions and/or adaptations.

Moreover, the present invention also allows considerable savings with respect to other known water injection solutions.

## Claims

1. Fuel supply system (4) for motor applications supplied with gaseous fuels with pressure reducer comprising:
- a pressure reducer (20), fluidly connected in input to a fuel tank (16) containing compressed fuel at an input pressure (Pi), and suitable for supplying said fuel in output, in the gas phase, to an internal combustion engine (12), at a delivery pressure (Pm) lower than the input pressure (Pi),
- at least one exchanger fluid passing through at least one conveying duct (28) so as to at least partially lap a portion of a body (24) of the pressure reducer (20) to increase the temperature of said body (24) and simultaneously reduce the temperature of said exchanger fluid,
wherein said conveying duct (28) is provided with at least an adjustment mean (32) suitable to regulate the flow rate of the exchanger fluid that laps the body (24) of the pressure reducer (20), so as to bring the body (24) of the pressure reducer (20) to a temperature higher than a predetermined minimum value,
**characterised in that** said at least one conveying duct (28) comprises a ventilation duct of an air conditioning system of the vehicle (8).

2. The fuel supply system (4) according to claim 1, wherein said predetermined minimum temperature value is higher than the freezing temperature of the atmospheric humidity or of that possibly contained in the gas supply under the conditions of use, in the case of fuels such as methane and hydrogen.

3. The fuel supply system (4) according to claim 1, wherein said predetermined minimum temperature value is higher than a boiling temperature of the fuel in output in the gas phase at the delivery pressure (Pm), in the case of LPG.

4. The fuel supply system (4) according to any one of the claims from 1 to 3, wherein said at least one conveying duct (28) comprises a branch duct of a cooling liquid of the internal combustion engine (12), so as to convey the cooling liquid towards the pressure reducer (20).

5. The fuel supply system (4) according to any one of the claims from 1 to 4, wherein said at least one conveying duct (28) extends to at least partially lap an exhaust gas recirculation valve (36) and the relative internal combustion engine EGR circuit (12).

6. The fuel supply system (4) according to claim 5, wherein said at least one conveying duct (28) extends to at least partially lap a heat exchanger (34) fluidly connected with said exhaust gas recirculation valve (36) .

7. The fuel supply system (4) according to any one of the claims from 1 to 6, wherein an exhaust gas recirculation valve (36) is at least partially integrated into the body (24) of said pressure reducer (20), so as to yield heat from the exhaust gas recirculation valve (36) to the pressure reducer (20).

8. The fuel supply system (4) according to any one of the claims from 1 to 7, wherein said adjustment mean (32) is a thermostatic valve.

9. The fuel supply system (4) according to any one of the claims from 1 to 7, wherein said adjustment mean (32) is a proportional valve.

10. The fuel supply system (4) according to any one of the preceding claims, wherein a water tank is provided for the collection of condensate liquid generated by the heat exchange between the exchanger fluid and the body (24) of the pressure reducer (20).

11. Method of adjusting a fuel supply system (4) for vehicles (8) supplied with gaseous fuels with a pressure reducer comprising the steps of:
- providing a pressure reducer (20), fluidly connected in input to a fuel tank (16) containing compressed fuel at an input pressure (Pi), and configured to supply said fuel in output, in the gas phase, to an internal combustion engine (12), at a delivery pressure (Pm) lower than the input pressure (Pi),
- providing at least one exchanger fluid passing through at least one conveying duct (28) so as to at least partially lap a portion of a body (24) of the pressure reducer (20) to increase the temperature of said body (24) and simultaneously reduce the temperature of said exchanger fluid,
- providing, at said conveying duct (28) at least one adjustment mean (32),
- adjusting said adjustment mean (32) to regulate the flow rate of the exchanger fluid that laps the body (24) of the pressure reducer (20), so as to bring the body (24) of the pressure reducer (20) to a temperature higher than a predetermined minimum value, **characterised in that** the method comprises the step of connecting said at least one conveying duct (28) to a ventilation duct of an air conditioning system of the vehicle (8), so as to perform a thermal exchange between the pressure reducer (20) and a fluid of said air conditioning system.

12. Method of adjustment according to claim 11, comprising the step of:
- connecting said at least one conveying duct (28) to an exhaust gas recirculation valve (36) so as to perform a thermal exchange between the pressure reducer (20) and the exhaust gas recirculation valve (36).

13. Method of adjustment according to any one of the claims from 11 to 12, comprising the step of:
- adjusting the temperature of the internal combustion engine (12) by varying the heat exchange between the engine coolant liquid (12) and the pressure reducer (20) and/or the heat exchange between the exhaust gas recirculation EGR valve (32) and the pressure reducer (20) .

## Patentansprüche

1. Kraftstoffversorgungssystem (4) für Motoranwendungen, die mit gasförmigen Kraftstoffen versorgt werden, mit Druckminderer, umfassend:
- einen Druckminderer (20), der im Eingang bzw. eingangsseitig mit einem Kraftstofftank (16) verbunden ist, der verdichteten Kraftstoff mit einem Eingangsdruck (Pi) enthält, und geeignet ist, den Kraftstoff am Ausgang bzw. ausgangsseitig in der Gasphase einem Verbrennungsmotor (12) mit einem Lieferdruck (Pm) zuzuführen, der niedriger ist als der Eingangsdruck (Pi),
- zumindest ein Tauscherfluid bzw. eine Tauscherflüssigkeit, das bzw. die durch zumindest einen Förderkanal (28) fließt, um einen Abschnitt eines Körpers (24) des Druckminderers (20) zumindest teilweise zu überlappen bzw. zu umgeben, um die Temperatur des Körpers (24) zu erhöhen und gleichzeitig die Temperatur des Tauscherfluids zu verringern,
wobei der Förderkanal (28) mit zumindest einem Einstellmittel (32) versehen ist, das geeignet ist, die Flussrate des Tauscherfluids zu regulieren, das den Körper (24) des Druckminderers (20) umgibt, um den Körper (24) des Druckminderers (20) auf eine Temperatur zu bringen, die höher ist als ein vorbestimmter Mindestwert,
**dadurch gekennzeichnet, dass** der zumindest eine Förderkanal (28) einen Belüftungskanal eines Klimaanlagensystems des Fahrzeugs (8) umfasst.

2. Kraftstoffversorgungssystem (4) nach Anspruch 1, wobei der vorbestimmte Mindesttemperaturwert höher ist als die Gefriertemperatur der Luftfeuchtigkeit oder derjenigen, die möglicherweise in der Gasversorgung unter den Verwendungsbedingungen enthalten ist, im Fall von Kraftstoffen wie Methan und Wasserstoff.

3. Kraftstoffversorgungssystem (4) nach Anspruch 1, wobei der vorbestimmte Mindesttemperaturwert höher ist als eine Siedetemperatur des Kraftstoffs ausgangsseitig in der Gasphase bei dem Lieferdruck (Pm), im Fall von LPG.

4. Kraftstoffversorgungssystem (4) nach einem der Ansprüche 1 bis 3, wobei der zumindest eine Förderkanal (28) einen Abzweigkanal eines Kühlfluids bzw. einer Kühlflüssigkeit des Verbrennungsmotors (12) umfasst, um das Kühlfluid zu dem Druckminderer (20) zu befördern.

5. Kraftstoffversorgungssystem (4) nach einem der Ansprüche 1 bis 4, wobei sich der zumindest eine Förderkanal (28) so erstreckt, dass er ein Abgasrückführungsventil (36) und den relativen EGR-Kreislauf (12) des Verbrennungsmotors zumindest teilweise überlappt bzw. umgibt.

6. Kraftstoffversorgungssystem (4) nach Anspruch 5, wobei sich der zumindest eine Förderkanal (28) so erstreckt, dass er einen Wärmetauscher (34) zumindest teilweise überlappt bzw. umgibt, der mit dem Abgasrückführungsventil (36) fluidisch bzw. flüssigkeitsmäßig verbunden ist.

7. Kraftstoffversorgungssystem (4) nach einem der Ansprüche 1 bis 6, wobei ein Abgasrückführungsventil (36) zumindest teilweise in den Körper (24) des Druckminderers (20) integriert ist, um Wärme von dem Abgasrückführungsventil (36) an den Druckminderer (20) abzugeben.

8. Kraftstoffversorgungssystem (4) nach einem der Ansprüche 1 bis 7, wobei das Einstellmittel (32) ein Thermostatventil ist.

9. Kraftstoffversorgungssystem (4) nach einem der Ansprüche 1 bis 7, wobei das Einstellmittel (32) ein Proportionalventil ist.

10. Kraftstoffversorgungssystem (4) nach einem der vorhergehenden Ansprüche, wobei ein Wassertank zum Auffangen von Kondensflüssigkeit vorgesehen ist, die durch den Wärmeaustausch zwischen der Tauscherfluid und dem Körper (24) des Druckminderers (20) erzeugt wird.

11. Verfahren zum Einstellen eines Kraftstoffversorgungssystems (4) für Fahrzeuge (8), die mit gasförmigen Kraftstoffen versorgt werden, mit einem Druckminderer, umfassend die Schritte:
- Bereitstellen eines Druckminderers (20), der im Eingang bzw. eingangsseitig mit einem Kraftstofftank (16) verbunden ist, der verdichteten Kraftstoff mit einem Eingangsdruck (Pi) enthält, und konfiguriert ist, den Kraftstoff am Ausgang bzw. ausgangsseitig in der Gasphase einem Verbrennungsmotor (12) mit einem Lieferdruck (Pm) zuzuführen, der niedriger ist als der Eingangsdruck (Pi),
- Bereitstellen zumindest eines Tauscherfluids bzw. einer Tauscherflüssigkeit, das bzw. die durch zumindest einen Förderkanal (28) fließt, um einen Abschnitt eines Körpers (24) des Druckminderers (20) zumindest teilweise zu überlappten bzw. zu umgeben, um die Temperatur des Körpers (24) zu erhöhen und gleichzeitig die Temperatur des Tauscherfluids zu verringern,
- Bereitstellen, an dem Förderkanal (28), zumindest eines Einstellmittels (32),
- Einstellen des Einstellmittels (32) dahingehend, die Flussrate des Tauscherfluids zu regulieren, das den Körper (24) des Druckminderers (20) umgibt, um den Körper (24) des Druckminderers (20) auf eine Temperatur zu bringen, die höher ist als ein vorbestimmter Mindestwert,
**dadurch gekennzeichnet, dass** das Verfahren den Schritt des Verbindens des zumindest einen Förderkanals (28) mit einem Lüftungskanal eines Klimaanlagensystems des Fahrzeugs (8) umfasst, um einen Wärmeaustausch zwischen dem Druckminderer (20) und einem Fluid bzw. einer Flüssigkeit des Klimaanlagensystems durchzuführen.

12. Verfahren zum Einstellen nach Anspruch 11, umfassend den Schritt:
- Verbinden des zumindest einen Förderkanals (28) mit einem Abgasrückführungsventil (36), um einen Wärmeaustausch zwischen dem Druckminderer (20) und dem Abgasrückführungsventil (36) durchzuführen.

13. Verfahren zum Einstellen nach einem der Ansprüche 11 bis 12, umfassend den Schritt:
- Einstellen der Temperatur des Verbrennungsmotors (12) durch Variieren des Wärmeaustauschs zwischen der Motorkühlflüssigkeit (12) und dem Druckminderer (20) und/oder des Wärmeaustauschs zwischen dem Abgasrückführungs,EGR,-Ventil (32) und dem Druckminderer (20).

## Revendications

1. Système d'alimentation en carburant (4) pour des applications à des moteurs alimentés en carburants gazeux, avec réducteur de pression, comprenant :
- un réducteur de pression (20), relié fluidiquement en entrée à un réservoir de carburant (16) contenant du carburant comprimé à une pression d'entrée (Pi), et adapté pour fournir ledit carburant en sortie, dans la phase gazeuse, à un moteur à combustion interne (12), à une pression de refoulement (Pm) inférieure à la pression d'entrée (Pi),
- au moins un fluide échangeur traversant au moins un conduit d'acheminement (28) de manière à chevaucher au moins partiellement une partie d'un corps (24) du réducteur de pression (20) pour augmenter la température dudit corps (24) et réduire simultanément la température dudit fluide échangeur,
dans lequel ledit conduit d'acheminement (28) est pourvu d'au moins un moyen de réglage (32) adapté pour réguler le débit du fluide échangeur qui chevauche le corps (24) du réducteur de pression (20), de manière à amener le corps (24) du réducteur de pression (20) à une température supérieure à une valeur minimale prédéterminée,
**caractérisé en ce que** ledit au moins un conduit de transport (28) comprend un conduit de ventilation d'un système de climatisation du véhicule (8).

2. Système d'alimentation en carburant (4) selon la revendication 1, dans lequel ladite valeur de température minimale prédéterminée est supérieure à la température de congélation de l'humidité atmosphérique ou de celle potentiellement contenue dans l'alimentation en gaz dans les conditions d'utilisation, dans le cas de carburants tels que du méthane et de l'hydrogène.

3. Système d'alimentation en carburant (4) selon la revendication 1, dans lequel ladite valeur de température minimale prédéterminée est supérieure à une température d'ébullition du carburant en sortie dans la phase gazeuse à la pression de refoulement (Pm), dans le cas du GPL.

4. Système d'alimentation en carburant (4) selon l'une quelconque des revendications 1 à 3, dans lequel ledit au moins un conduit d'acheminement (28) comprend un conduit de dérivation d'un liquide de refroidissement du moteur à combustion interne (12), de manière à acheminer le liquide de refroidissement vers le réducteur de pression (20).

5. Système d'alimentation en carburant (4) selon l'une quelconque des revendications 1 à 4, dans lequel ledit au moins un conduit d'acheminement (28) s'étend jusqu'à chevaucher au moins partiellement une soupape de recirculation de gaz d'échappement (36) et le circuit EGR de moteur à combustion interne relatif (12).

6. Système d'alimentation en carburant (4) selon la revendication 5, dans lequel ledit au moins un conduit d'acheminement (28) s'étend jusqu'à chevaucher au moins partiellement un échangeur de chaleur (34) relié de manière fluidique à ladite soupape de recirculation de gaz d'échappement (36).

7. Système d'alimentation en carburant (4) selon l'une quelconque des revendications 1 à 6, dans lequel une soupape de recirculation de gaz d'échappement (36) est au moins partiellement intégrée au corps (24) dudit réducteur de pression (20), de manière à rapporter de la chaleur de la soupape de recirculation de gaz d'échappement (36) au réducteur de pression (20).

8. Système d'alimentation en carburant (4) selon l'une quelconque des revendications 1 à 7, dans lequel ledit moyen de réglage (32) est une soupape thermostatique.

9. Système d'alimentation en carburant (4) selon l'une quelconque des revendications 1 à 7, dans lequel ledit moyen de réglage (32) est une soupape proportionnelle.

10. Système d'alimentation en carburant (4) selon l'une quelconque des revendications précédentes, dans lequel un réservoir d'eau est prévu pour la collecte de liquide de condensation généré par l'échange thermique entre le fluide échangeur et le corps (24) du réducteur de pression (20).

11. Procédé de réglage d'un système d'alimentation en carburant (4) pour véhicules (8) alimentés en carburants gazeux avec un réducteur de pression comprenant les étapes consistant à :
- prévoir un réducteur de pression (20), relié fluidiquement en entrée à un réservoir de carburant (16) contenant du carburant comprimé à une pression d'entrée (Pi), et configuré pour fournir ledit carburant en sortie, dans la phase gazeuse, à un moteur à combustion interne (12), à une pression de refoulement (Pm) inférieure à la pression d'entrée (Pi),
- prévoir au moins un fluide échangeur traversant au moins un conduit d'acheminement (28) de manière à chevaucher au moins partiellement une partie d'un corps (24) du réducteur de pression (20) pour augmenter la température dudit corps (24) et réduire simultanément la température dudit fluide échangeur,
- prévoir, au niveau dudit conduit d'acheminement (28), au moins un moyen de réglage (32),
- régler ledit moyen de réglage (32) pour réguler le débit du fluide échangeur qui chevauche le corps (24) du réducteur de pression (20), de manière à amener le corps (24) du réducteur de pression (20) à une température supérieure à une valeur minimale prédéterminée,
**caractérisé en ce que** le procédé comprend l'étape consistant à relier ledit au moins un conduit d'acheminement (28) à un conduit de ventilation d'un système de climatisation du véhicule (8), de manière à réaliser un échange thermique entre le réducteur de pression (20) et un fluide dudit système de climatisation.

12. Procédé de réglage selon la revendication 11, comprenant l'étape consistant à :
- relier ledit au moins un conduit d'acheminement (28) à une soupape de recirculation de gaz d'échappement (36) de manière à réaliser un échange thermique entre le réducteur de pression (20) et la soupape de recirculation de gaz d'échappement (36).

13. Procédé de réglage selon l'une quelconque des revendications 11 à 12, comprenant l'étape consistant à :
- régler la température du moteur à combustion interne (12) en faisant varier l'échange thermique entre le liquide de refroidissement moteur (12) et le réducteur de pression (20) et/ou l'échange thermique entre la soupape EGR de recirculation de gaz d'échappement (32) et le réducteur de pression (20).
